# EUROPEAN PATENT APPLICATION

(11) **EP 2 128 995 A1**
(43) Date of publication of application: **02.12.2009**
(21) Application number: 08305214.2
(22) Date of filing: 30.05.2008
(51) Int. Cl.: H04B 1/40

(54) **Transceiver module, mobile station and base station**

(71) Applicant: Alcatel Lucent, 75008 Paris (FR)
(72) Inventor: Bitzer, Thomas, 73614 Schorndorf (DE); Matz, Ralf, 71566 Althütte (DE); Pascht, Andreas, 73614 Schorndorf (DE); Haberland, Bernd, 70186 Stuttgart (DE)
(74) Representative: Schneider, Sandra

(57) **Abstract**

The present invention relates to a transceiver module (10) for transmission and reception of radio signals being simultaneously operable in multiple frequency bands and being connectible to an antenna module (40). The transceiver module (10) comprises the power amplifier component (28) which is simultaneously operable in more than one frequency band. The invention further relates to a base station comprising said transceiver module (10) and a mobile station comprising said transceiver module (10).

## Description

### TECHNICAL FIELD

The invention relates to a transceiver module for transmission and reception of radio signals. The invention further relates to a mobile station comprising said transceiver module and to a base station comprising said transceiver module.

### BACKGROUND OF THE INVENTION

In wireless networks for each different wireless transmission standard, e. g. GSM450, GSM900, GSM1800, GSM1900, UMTS, LTE, WIMAX one single transmitter and receiver architecture has to be designed which means much redundancy and effort. Furthermore new standards require additional new architectures. With software defined radio (SDR) the goal is to cover more than one standard with one broadband solution which can be configured and adapted to the require standards via software.

For other existing base stations dedicated modules and transceiver architectures exist for each standard, e. g. if a base transceiver station covers GSM800, GSM900, UMTS, LTE, then often four different modules are present at the BTS.

In EP 1816752 A1 a multi-band multi-standard modular transceiver circuit for wireless communication is described. The transceiver circuit transmits and receives multi-standard multi-band radio signals. It has a modular design with exchangeable and removable modules with dedicated functionalities and well defined interfaces between the modules. Said transceiver circuit comprises a conversion module capable of dealing with a large variety of frequency bands, different standards and at least two carriers.

### OBJECT OF THE INVENTION

An object of the invention is to provide a transceiver module for transmission and reception of radio signals which is simultaneously operable in multiple frequency bands. A further object of the invention is to provide a corresponding mobile station and a corresponding base station.

### SUMMARY OF THE INVENTION

These objects and other objects are solved by the features of the independent claims. Features of preferred embodiments of the invention are subject matter of the dependent claims.

According to one aspect of the invention the transceiver module is connectable to an antenna module and comprises a power amplifier component which is simultaneously operable in more than one frequency band.

The power amplifier component may for example comprise several power amplifiers each dedicated to a single frequency and dedicated and adapted to a certain power characteristic. The power amplifier component may also comprise at least one wideband power amplifier covering at least two of said multiple frequency bands. Said architecture of a power amplifier component with known and defined interfaces allows to simplify the architecture if more and more broadband power amplifiers are available. In this case the dedicated power amplifiers for one frequency band can be replaced broadband amplifiers. The architecture can thus be simplified.

According to a further embodiment of the invention the transceiver module comprises a duplexer component which comprises multiple duplexers connectable to said antenna module. Each of said multiple duplexers is operable in at least one frequency band. If more wide band duplexers become available said duplexers being operable in at least one frequency band can be replaced by duplexers being operable in at least two of said multiple frequency bands. In this case the architecture of the transceiver module can be further simplified.

The inventive architecture enables the operation of the transmitter part as well as the receiver part of different standards and different frequencies in parallel at the same time.

Multiple digital to analogue converters (D/A), up-conversion modules, power amplifiers (PA), filters, multiple low noise amplifiers (LNA) and downconversion modules can be employed, one for at least one frequency band. This is for example the case when there are not yet broadband components obtainable. If broadband components are available the architecture can be simplified. One power amplifier for example which has a frequency range of 1.7 to 2.7 GH, e. g. based on GaN technology, can replace two or more narrow band power amplifiers.

According to a further preferred embodiment of the invention the transceiver module comprises a feedback path in-between the outputs of said power amplifier component and the signal conditioning unit operable on the base band signal at the input of the transceiver module. Such a transceiver module offers the advantage that only one signal conditioning unit and one feedback path is necessary which lead to a further simplification of the architecture of the module.

According to a preferred embodiment of the invention the feedback path is multiplexed between multiple radio frequency (RF) parts in order to transmit the reference signal into the digital part at the input of said signal conditioning unit. A feedback path further comprises an analogue to digital converter (A/D) to transmit the reference signal from the feedback unit in the feedback path to the digital part at the input of the signal conditioning unit.

According to a preferred embodiment of the invention the transceiver module is comprised in a base station, more particularly in a base transceiver station which covers different standards, e. g. GSM450, GSM900, GSM1800, GSM1900, UMTS, LTE, WIMAX, with one single architecture.

According to another embodiment of the invention the transceiver module is comprised in a mobile station which covers more than one different standards and/or frequency bands.

### BRIEF DESCRIPTION OF THE DRAWING

Other characteristics and advantages of the invention will become apparent in the following detailed description of a preferred embodiment of the invention illustrated by the accompanying drawing given by way of nonlimiting illustration.

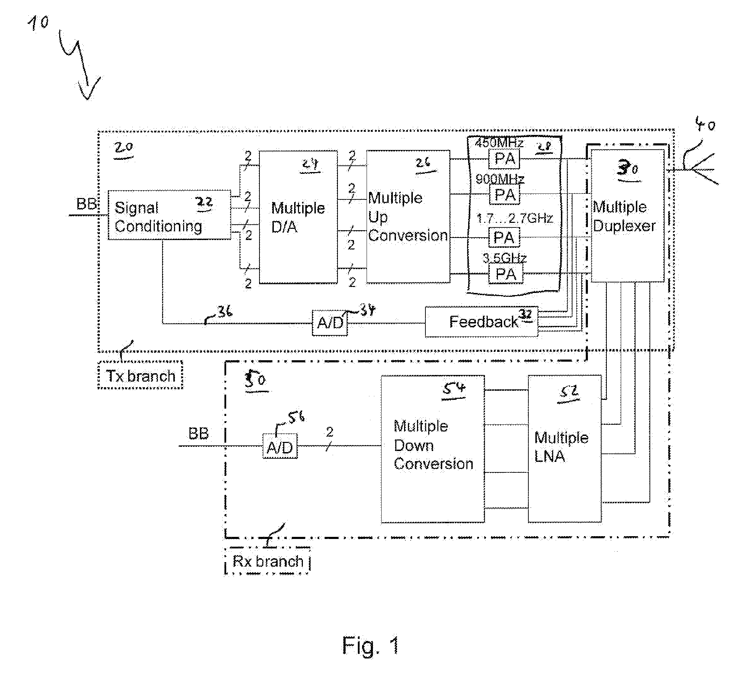

Figure 1 shows a schematic overview over an example of an inventive transceiver module.

### DETAILED DESCRIPTION OF THE INVENTION

An example of the inventive transceiver module 10 is illustrated with respect to Figure 1, which illustrates the de-fragmented transceiver architecture.

In the transmitter part 20 of the transceiver 10, the baseband data stream BB enters the signal conditioning component 22 which performs the pre-distortion and the IQ (In-Phase/Quadrature) imbalance compensation. In order to perform pre-distortion and IQ imbalance compensation a feedback path 36 is used which feeds the information of the power amplifiers non linear characteristic as well as the IQ imbalance to the pre-distortional algorithms. The power amplifier module 28 comprises one broadband power amplifier or several power amplifiers which operate in one or more frequency bands. The feedback path 36 feeds back the output signals of the power amplifier module 28 over the feedback module 32 and the analogue to digital converter 34 to the signal conditioning block 22. In the multiple digital to analogue converter block 24 the signal conditioned digital data stream is transformed into two analogue signals for each frequency band. It is possible that there are different digital to analogue converters for the different frequency bands within the multiple digital to analogue converter block 24. In the multiple up conversion module 26 the signal is converted into the appropriate frequency bands. Depending on the used frequency band the appropriate power amplifier in the power amplifier block 28 amplifies the signal to the necessary power level. The multiple duplexer component 30 provides transmission and reception duplexing for the antenna module 40. It further comprises filters in order to let the signal pass in the desired frequency band and block undesired emissions in the adjacent frequency ranges. The signal passes to the antenna module 40.

The received in-band signal from the antenna module 40 is filtered by the multiple duplexer component 30 and routed to the receive branch 50 of the transceiver 10. The received signal is routed to the multiple low noise amplifier module 52 in the receive branch 50 of the transceiver 10. The multiple low noise amplifier component 52 amplifies the received signal without adding too much noise in the low noise amplifiers. Multiple narrow band low noise amplifier can be replaced by fewer broadband types as well to further reduce the complexity of the architecture. In the multiple down conversion component 45 the signal is converted back into the base stand. The analogue to digital converter 56 performs the conversion of the analogue signal into the digital data stream.

It is an advantage of the invention that in the transmit branch 20 as well as in the receive branch 50 there are modules that are operable simultaneously at multiple frequency bands. Examples for those modules are the multiple digital to analogue converter 24, the multiple up conversion module 26, the power amplifier module 28, the multiple duplexer module 30, the multiple low noise amplifier module 52, or multiple conversion module 54. In each of these modules are operable simultaneously at multiple frequency bands. The operability at multiple frequency bands can be realised by several narrow band modules which are contained in the module that is operable at multiple frequency bands simultaneously or it can be realised by one or more broadband modules that are comprised in the module that is operable simultaneously at multiple frequency bands. By this modular approach more and more narrow band components can be replaced by broader band components without having to change the overall architecture.

The inventive transceiver module is preferably comprised in a multi-standard multi-frequency base station. The inventive transceiver 10 can also be comprised in a mobile station which is then operable at multiple frequency bands simultaneously.

With the inventive architecture multiple mobile radio frequency bands can be addressed simultaneously. Parallel operation of different standards in different frequency bands is possible simultaneously. The architecture offers flexibility at multiple narrow band parts can successively be replaced by fewer broad bands components without having to change the overall architecture. Only one signal conditioning module 22 is necessary and only one feedback path 36 is necessary. Therefore fewer overall components are required.

The feedback path 36 is multiplexed within the feedback module 32 in order to route the reference signal into the digital part. This can be realised by a multi port switch. High RF is isolation of the multi port switch can prevent cross talk.

## Claims

1. Transceiver module (10) for transmission and reception of radio signals, the transceiver module (10) being simultaneously operable in multiple frequency bands and being connectable to an antenna module (40), comprising a power amplifier component (28) which is simultaneously operable in more than one frequency band.

2. Transceiver module (10) of claim 1, further **characterized by** said power amplifier component (28) comprising at least one wideband power amplifier covering at least two of said multiple frequency bands.

3. Transceiver module (10) of claim 1, further comprising a duplexer component (30) comprising multiple duplexers connectable to said antenna module (40), each of said multiple duplexers being operable in at least one frequency band.

4. Transceiver module (10) of claim 1, further comprising a duplexer component (30) comprising at least one duplexer connectable to said antenna module (40), said duplexer being operable in at least two of said multiple frequency bands.

5. Transceiver module (10) of claim 1, further **characterized by** a feedback path (36) in between the outputs of said power amplifier component (28) and a signal conditioning unit (22) operable on the baseband signal at the input of the transceiver module.

6. Transceiver module of claim 5, further **characterized by** a feedback component (32) in said feedback path (36) comprising a multiplexer for multiplexing the radio frequency paths at the output of the power amplifier component (28) into one.

7. Base station comprising the transceiver module of claim 1.

8. Mobile station comprising the transceiver module of claim 1.
